# EUROPÄISCHE PATENTSCHRIFT

(11) **EP 4 501 693 B1**
(45) Veröffentlichungstag und Bekanntmachung des Hinweises auf die Patenterteilung: **29.07.2026**
(21) Anmeldenummer: 24184533.8
(22) Anmeldetag: 26.06.2024
(51) Int. Cl.: B60L 50/72, B60L 58/33, H01M 8/04007, H01M 8/04014, H01M 8/0662, B60L 1/02, H01M 8/04828, H01M 8/04029

(54) **FAHRZEUG MIT EINEM BRENNSTOFFZELLENSYSTEM UND VERFAHREN ZUM BETREIBEN EINES BRENNSTOFFZELLENSYSTEMS IN EINEM FAHRZEUG**
VEHICLE HAVING A FUEL CELL SYSTEM AND METHOD FOR OPERATING A FUEL CELL SYSTEM IN A VEHICLE
VÉHICULE COMPRENANT UN SYSTÈME DE PILE À COMBUSTIBLE ET PROCÉDÉ DE FONCTIONNEMENT D'UN SYSTÈME DE PILE À COMBUSTIBLE DANS UN VÉHICULE

(30) Priorität: 02.08.2023 DE 102023120480
(43) Veröffentlichungstag der Anmeldung: 05.02.2025
(73) Patentinhaber: Purem GmbH, 66539 Neunkirchen (DE)
(72) Erfinder: Gaiser, Gerd, Reutlingen (DE)
(74) Vertreter: Ruttensperger Lachnit Trossin Gomoll

(56) Entgegenhaltungen:
- DE-A1- 102013 218 958
- DE-A1- 102014 019 482
- DE-A1- 102015 213 913
- DE-A1- 102021 202 370
- US-B2- 11 335 922

## Beschreibung

Die vorliegende Erfindung betrifft ein Fahrzeug mit einem Brennstoffzellensystem und ein Verfahren zum Betreiben eines Brennstoffzellensystems in einem Fahrzeug.

In einem in einem Fahrzeug zur Erzeugung elektrischer Energie eingesetzten Brennstoffzellensystem entsteht bei der Umsetzung von einem Anodenbereich einer Brennstoffzellenanordnung zugeführtem, Wasserstoff (H₂) enthaltendem Anodengas und einem Kathodenbereich der Brennstoffzellenanordnung zugeführtem, Sauerstoff (O₂) enthaltendem Kathodengas abhängig vom Typ der eingesetzten Brennstoffzellenanordnung ein vergleichsweise stark mit Wasser bzw. Wasserdampf angereichertes Anodenabgas oder/und ein vergleichsweise stark mit Wasser bzw. Wasserdampf angereichertes Kathodenabgas. Wird derartiges stark mit Wasser bzw. Wasserdampf angereichertes, das Anodenabgas oder/und das Kathodenabgas enthaltendes bzw. umfassendes Brennstoffzellenabgas bei vergleichsweise niedriger Umgebungstemperatur zur Umgebung abgegeben, kann beim Kontakt des wasserhaltigen Brennstoffzellenabgases mit der vergleichsweise kalten Umgebungsluft am Austrittsort des Brennstoffzellenabgases durch auskondensierendes Wasser eine intensive Nebelbildung auftreten. Dies ist nicht nur aus optischen Gründen unerwünscht, sondern es besteht die Gefahr, dass durch das bei niedriger Umgebungstemperatur und insbesondere kaltem Untergrund auskondensierende und am Untergrund sich niederschlagende Wasser Eis gebildet wird.

Aus der nachveröffentlichten deutschen Patentanmeldung DE 10 2023 108 806 ist eine Brennstoffzellenabgasanlage bekannt, bei welcher Wasser bzw. Wasserdampf enthaltendes Brennstoffzellenabgas in einer in die Brennstoffzellenabgasanlage integrierte Brennstoffzellenabgas/Umgebungsluft-Mischanordnung mit an einer Umgebungsluft-Heizanordnung erwärmter Umgebungsluft gemischt wird. Die Brennstoffzellenabgas/Umgebungsluft-Mischanordnung umfasst ein in einer Mischkammer gebildetes Mischvolumen, in welches die erwärmte Umgebungsluft und das Brennstoffzellenabgas eingeleitet werden. Nach Durchmischung des Brennstoffzellenabgases mit der Umgebungsluft wird das in dem Mischvolumen gebildete Gemisch aus Brennstoffzellenabgas und erwärmter Umgebungsluft aus der Mischkammer über einen stromabwärts der Mischkammer liegenden Teil einer Brennstoffzellenabgasanlage an einer Austrittsöffnung der Brennstoffzellenabgasanlage zur Umgebung abgegeben. Im Bereich der Austrittsöffnung der Brennstoffzellenabgasanlage vermischt sich das Gemisch aus Brennstoffzellenabgas und erwärmter Umgebungsluft mit der nicht erwärmten Umgebungsluft.

Ein Fahrzeug gemäß dem Oberbegriff des Anspruchs 1 und dem Oberbegriff des Anspruchs 15 ist aus der DE 10 2013 218 958 A1 bekannt. Bei diesem bekannten Fahrzeug werden ein von einer Brennstoffzelle abgegebener Abgasstrom und ein Strom erwärmter Luft zusammengeführt, so dass vor Abgabe zur Umgebung ein Gemischstrom aus erwärmter Luft und Brennstoffzellenabgas erzeugt wird. Ein Auslass zur Abgabe von Brennstoffzellenabgas mündet in einen Auslass eines die erwärmte Luft abgebenden Wärmetauschers ein, so dass separate Auslässe für die beiden Abgasströme nicht erforderlich sind und ein strukturell vereinfachter Aufbau der Abgasanlage erreicht wird.

Es ist die Aufgabe der vorliegenden Erfindung, ein Fahrzeug mit einem Brennstoffzellensystem und ein Verfahren zum Betreiben eines Brennstoffzellensystems in einem Fahrzeug vorzusehen, mit welchen der Gefahr einer Nebelbildung bei der Abgabe von Brennstoffzellenabgas in die Umgebung effektiv entgegengewirkt werden kann.

Gemäß einem ersten Aspekt der vorliegenden Erfindung wird diese Aufgabe gelöst durch ein Fahrzeug gemäß Anspruch 1, umfassend:
- ein Brennstoffzellensystem mit einer Brennstoffzellenanordnung und einer Brennstoffzellenabgas aus der Brennstoffzellenanordnung aufnehmenden Brennstoffzellenabgasanlage, wobei die Brennstoffzellenabgasanlage einen Brennstoffzellenabgas-Austrittsbereich zur Abgabe von Brennstoffzellenabgas aus der Brennstoffzellenabgasanlage aufweist,
- eine Umgebungsluft-Heizanordnung zur Erwärmung von mit wenigstens einem Teil des Brennstoffzellenabgases zu durchmischender Umgebungsluft, wobei die Umgebungsluft-Heizanordnung einen Umgebungsluft-Austrittsbereich zur Abgabe von in der Umgebungsluft-Heizanordnung erwärmter Umgebungsluft aufweist.

Bei einer erfindungsgemäßen Ausgestaltungsform eines Fahrzeugs ist der Brennstoffzellenabgas-Austrittsbereich bezüglich einer Umgebungsluft-Strömungsrichtung der am Umgebungsluft-Austrittsbereich von der Umgebungsluft-Heizanordnung abgegebenen erwärmten Umgebungsluft stromabwärts des Umgebungsluft-Austrittsbereichs positioniert. Dies bedeutet, dass der Brennstoffzellenabgas-Austrittsbereich von der die Umgebungsluft-Heizanordnung verlassenden erwärmten Umgebungsluft umströmbar ist und dadurch eine Durchmischung von Brennstoffzellenabgas und erwärmter Umgebungsluft herbeigeführt bzw. unterstützt wird.

Bei einer alternativen erfindungsgemäßen Ausgestaltung eines Fahrzeugs ist der Brennstoffzellenabgas-Austrittsbereich bezüglich der Umgebungsluft-Strömungsrichtung der am Umgebungsluft-Austrittsbereich von der Umgebungsluft-Heizanordnung abgegebenen erwärmten Umgebungsluft stromaufwärts des Umgebungsluft-Austrittsbereichs positioniert. Bei dieser Ausgestaltung kann vorgesehen sein, dass das am Brennstoffzellenabgas-Austrittsbereich abgegebene Brennstoffzellenabgas die Umgebungsluft-Heizanordnung umströmt, dabei aber in der Umgebungsluft-Heizanordnung nicht erwärmt wird, und sich dabei mit der aus dieser erwärmt abgegebenen Umgebungsluft mischt.

Bei einer weiteren alternativen erfindungsgemäßen Ausgestaltung, welche auch bei den vorangehend erläuterten Alternativen Ausgestaltungen eines Fahrzeugs realisiert sein kann, sind der Brennstoffzellenabgas-Austrittsbereich und der Umgebungsluft-Austrittsbereich derart positioniert, dass ein am Brennstoffzellenabgas-Austrittsbereich abgegebener Strom von Brennstoffzellenabgas und ein am Umgebungsluft-Austrittsbereich abgegebener Strom von erwärmter Umgebungsluft einander wenigstens bereichsweise durchdringen. Bei dieser Ausgestaltung können beispielsweise die beiden Gasströme im Wesentlichen parallel oder zueinander angewinkelt in im Wesentlichen den gleichen Volumenbereich geleitet werden, so dass diese Gasströme einander durchdringen und dabei das Brennstoffzellenabgas mit der erwärmten Umgebungsluft gemischt wird.

Um bereits vor Abgabe der erwärmten Umgebungsluft und des Brennstoffzellenabgases zur Umgebung, also in nicht erwärmte Umgebungsluft, eine zur Minderung der relativen Feuchte führenden Durchmischung von erwärmter Umgebungsluft und Brennstoffzellenabgas erreichen zu können, ist vorgesehen, dass der Umgebungsluft-Austrittsbereich zur Abgabe von erwärmter Umgebungsluft in einen über eine Mehrzahl von Öffnungsbereichen zur Umgebung offenen Aggregatraum des Fahrzeugs angeordnet ist, und dass der Brennstoffzellenabgas-Austrittsbereich zur Abgabe von Brennstoffzellenabgas in den Aggregatraum angeordnet ist. Ein derartiger Aggregatraum ist ein Raum bzw. ein Volumenbereich in dem Fahrzeug, in welchem auch andere Systembereiche, wie zum Beispiel ein Antriebsmotor, die Umgebungsluft-Heizanordnung, Teile der Fahrzeugelektronik und dergleichen, angeordnet sind.

Dadurch, dass bei einem erfindungsgemäß aufgebauten Fahrzeug dem stark mit Wasser bzw. Wasserdampf angereicherten Brennstoffzellenabgas erwärmte Umgebungsluft beigemischt wird, wird es möglich, vor Abgabe des Brennstoffzellenabgases bzw. des aus dem Brennstoffzellenabgas und der erwärmten Umgebungsluft generierten Gemisches dieses Gemisch mit einer relativen Feuchte von deutlich unter 100% bereitzustellen. Kommt dieses Gemisch mit einer im Vergleich zum Brennstoffzellenabgas deutlich geminderten relativen Feuchte bei der Abgabe aus der Brennstoffzellenabgasanlage in Kontakt mit vergleichsweise kalter Umgebungsluft, ist die Gefahr, dass durch eine spontane Abkühlung des Gemisches die relative Feuchte einen Wert von 100% erreicht bzw. übersteigt und damit eine Nebelbildung auftritt, deutlich gemindert. Da in dem erfindungsgemäß aufgebauten Fahrzeug die erwärmte Umgebungsluft mit dem aus der Brennstoffzellenabgasanlage abgegeben Brennstoffzellenabgas gemischt wird, ist es nicht erforderlich, in die Brennstoffzellenabgasanlage Systembereiche zu integrieren, welche der Durchmischung von Brennstoffzellenabgas und erwärmter Umgebungsluft dienen. Die Brennstoffzellenabgasanlage kann somit konventionell aufgebaut sein, wobei lediglich der Brennstoffzellenabgas-Austrittsbereich derselben am Fahrzeug bzw. im Fahrzeug so positioniert wird, dass das aus der Brennstoffzellenabgasanlage austretende Brennstoffzellenabgas und die erwärmte Umgebungsluft in den gleichen Volumenbereich beispielsweise im Fahrzeug oder in einem Bereich außerhalb des Fahrzeugs abgegeben werden.

Um ohne zusätzlichen Energieeintrag bzw. ohne Verwendung von in einem Brennstoffzellensystem erzeugter elektrischer Energie die mit dem Brennstoffzellenabgas erwärmt zu vermischende Umgebungsluft effizient erwärmen zu können, wird vorgeschlagen, dass die Umgebungsluft-Heizanordnung wenigstens einen von der zu erwärmenden Umgebungsluft und einem in einem Kühlkreislauf strömenden Kühlmedium durchströmbaren Wärmetauscher zur Übertragung von in dem Kühlmedium enthaltener Wärme auf die zu erwärmende Umgebungsluft umfasst.

Wenn in einem Fahrzeug mehrere Kühlkreisläufe vorgesehen sind, beispielsweise um verschiedene Systembereiche des Fahrzeugs, wie zum Beispiel die Elektronik einerseits bzw. eine Brennstoffzellenanordnung andererseits, voneinander unabhängig kühlen zu können und diese voneinander unabhängig bei unterschiedlichen Temperaturniveaus halten zu können, kann die Umgebungsluft-Heizanordnung eine Mehrzahl von von der zu erwärmenden Umgebungsluft seriell durchströmbaren Wärmetauschern umfassen. Dabei kann für eine effiziente Erwärmung der Umgebungsluft beispielsweise der Brennstoffzellenabgas-Austrittsbereich stromabwärts eines bezüglich einer Strömungsrichtung der zu erwärmenden Umgebungsluft am weitesten stromabwärts positionierten Wärmetauschers der Mehrzahl von Wärmetauschern positioniert sein.

Zum Erreichen einer insbesondere auch an den Wassergehalt des Brennstoffzellenabgases angepassten Regulierung der Temperatur der erwärmten Umgebungsluft kann der Umgebungsluft-Heizanordnung eine Strömungsdrosselanordnung zur Drosselung der durch die Umgebungsluft-Heizanordnung hindurchströmenden Menge der zu erwärmenden Umgebungsluft zugeordnet sein.

Zur Abgabe des Brennstoffzellenabgases in einen Volumenbereich außerhalb der Brennstoffzellenabgasanlage kann der Brennstoffzellenabgas-Austrittsbereich wenigstens eine Brennstoffzellenabgas-Austrittsöffnung aufweisen.

Dabei kann die effiziente Durchmischung von Brennstoffzellenabgas und erwärmter Umgebungsluft beispielsweise dadurch unterstützt werden, dass:
- wenigstens eine, vorzugsweise jede Brennstoffzellenabgas-Austrittsöffnung zur Abgabe von Brennstoffzellenabgas in einer der Umgebungsluft-Strömungsrichtung im Wesentlichen entsprechenden Brennstoffzellenabgas-Strömungsrichtung ausgebildet ist,
   oder/und
- wenigstens eine, vorzugsweise jede Brennstoffzellenabgas-Austrittsöffnung zur Abgabe von Brennstoffzellenabgas in einer der Umgebungsluft-Strömungsrichtung im Wesentlichen entgegengesetzten Brennstoffzellenabgas-Strömungsrichtung ausgebildet ist,
   oder/und
- wenigstens eine, vorzugsweise jede Brennstoffzellenabgas-Austrittsöffnung zur Abgabe eines fächerartig oder kegelartig aufgeweiteten Brennstoffzellenabgasstroms ausgebildet ist.

Es ist in diesem Zusammenhang darauf hinzuweisen, dass mit der Umgebungsluft-Strömungsrichtung bzw. der Brennstoffzellenabgas-Strömungsrichtung jeweils diejenige Strömungsrichtung bzw. Haupt-Strömungsrichtung angesprochen ist, welche die Umgebungsluft bzw. das Brennstoffzellenabgas am Ort der jeweiligen Abgabe primär bzw. im Mittel aufweist.

Zur weiteren Unterstützung der Vermischung von erwärmter Umgebungsluft und Brennstoffzellenabgas kann bezüglich der Umgebungsluft-Strömungsrichtung stromabwärts des Brennstoffzellenabgas-Austrittsbereichs eine Mischanordnung mit wenigstens einem Umgebungsluft/Brennstoffzellenabgas-Mischer angeordnet sein.

Um vor dem Austritt zur Umgebung in dem Aggregatraum eine im Wesentlichen gleichmäßige Durchmischung von Brennstoffzellenabgas und erwärmter Umgebungsluft gewährleisten zu können, ist es vorteilhaft, wenn ein Abstand des Brennstoffzellenabgas-Austrittsbereichs von dem Umgebungsluft-Austrittsbereich kleiner als 50 %, vorzugsweise kleiner als 10 %, eines Abstands des wenigstens einen Öffnungsbereichs von dem Umgebungsluft-Austrittsbereich ist.

Zum Erreichen einer ausreichenden Durchströmung der Umgebungsluft-Heizanordnung mit zu erwärmender Umgebungsluft beispielsweise bei stehendem oder sich nur langsam bewegendem Fahrzeug oder bei Positionierung der Umgebungsluft-Heizanordnung in einem auch bei fahrendem Fahrzeug nicht direkt angeströmten Bereich des Fahrzeugs wird bei einem eigenständigen Erfindungsaspekt, welcher selbstverständlich mit den vorangehend bzw. den nachgehend erläuterten Erfindungsaspekten kombiniert werden kann, vorgeschlagen, dass der Umgebungsluft-Heizanordnung ein Umgebungsluftgebläse zum Fördern von zu erwärmender Umgebungsluft oder/und erwärmter Umgebungsluft zugeordnet ist. Wenn dabei das Umgebungsluftgebläse bezüglich der Umgebungsluft-Strömungsrichtung stromabwärts der Umgebungsluft-Heizanordnung, beispielsweise stromaufwärts des Brennstoffzellenabgas-Austrittsbereichs, angeordnet ist, erzeugt das Umgebungsluftgebläse gleichzeitig eine zur besseren Durchmischung mit Brennstoffzellenabgas beitragende Verwirbelung der erwärmten Umgebungsluft.

Eine besonders effiziente Durchmischung von erwärmter Umgebungsluft und Brennstoffzellenabgas kann unter Ausnutzung der Förderwirkung des Umgebungsluftgebläses dann erreicht werden, wenn das Umgebungsluftgebläse bezüglich der Umgebungsluft-Strömungsrichtung stromabwärts des Brennstoffzellenabgas-Austrittsbereichs angeordnet ist.

Die Brennstoffzellenabgasanlage kann eine wenigstens eine der folgenden Baugruppen aufweisende Brennstoffzellenabgas-Behandlungsanordnung umfassen:
- Flüssigkeitsabscheider,
- Katalysator,
- Schalldämpfer.

Die Erfindung betrifft ferner ein Verfahren zum Betreiben eines Brennstoffzellensystems in einem erfindungsgemäß aufgebauten Fahrzeug, bei welchem Verfahren ein Gemisch aus Umgebungsluft und an einem Brennstoffzellenabgas-Austrittsbereich einer einer Brennstoffzellenanordnung des Brennstoffzellensystems zugeordneten Brennstoffzellenabgasanlage abgegebenem Brennstoffzellenabgas erzeugt wird, wobei wenigstens ein Teil der dem Brennstoffzellenabgas beigemischten Umgebungsluft vor Vermischung mit dem Brennstoffzellenabgas erwärmt wird.

Die erwärmte Umgebungsluft und das Brennstoffzellenabgas werden zum Erreichen einer gleichmäßigen Durchmischung in den zur Umgebung offenen Aggregatraum des Fahrzeugs abgegeben, so dass das Gemisch aus Brennstoffzellenabgas und erwärmter Umgebungsluft im Wesentlichen in dem Aggregatraum noch vor einem Kontakt mit der das Fahrzeug umgebenden, nicht erwärmten Umgebungsluft gebildet wird.

Die mit dem Brennstoffzellenabgas erwärmt zu mischende Umgebungsluft kann in wenigstens einem Wärmetauscher durch thermische Wechselwirkung mit einem in einem Kühlkreislauf des Fahrzeugs strömenden Kühlmedium erwärmt werden.

Zum Einstellen einer Temperatur der in dem wenigstens einen Wärmetauscher zu erwärmenden Umgebungsluft kann ein Massenstrom der den wenigstens einen Wärmetauscher durchströmenden Umgebungsluft oder/und ein Massenstrom des den wenigstens einen Wärmetauscher durchströmenden Kühlmediums verändert werden.

Gemäß einem weiteren Aspekt der vorliegenden Erfindung wird diese Aufgabe gelöst durch ein Fahrzeug gemäß Anspruch 15, umfassend:
- ein Brennstoffzellensystem mit einer Brennstoffzellenanordnung und einer Brennstoffzellenabgas aus der Brennstoffzellenanordnung aufnehmenden Brennstoffzellenabgasanlage, wobei die Brennstoffzellenabgasanlage einen Brennstoffzellenabgas-Austrittsbereich zur Abgabe von Brennstoffzellenabgas aus der Brennstoffzellenabgasanlage aufweist,
- eine Umgebungsluft-Heizanordnung zur Erwärmung von mit wenigstens einem Teil des Brennstoffzellenabgases zu durchmischender Umgebungsluft, wobei die Umgebungsluft-Heizanordnung einen Umgebungsluft-Austrittsbereich zur Abgabe von in der Umgebungsluft-Heizanordnung erwärmter Umgebungsluft aufweist.

Dabei sind der Brennstoffzellenabgas-Austrittsbereich und der Umgebungsluft-Austrittsbereich derart positioniert, dass ein am Brennstoffzellenabgas-Austrittsbereich abgegebener Strom von Brennstoffzellenabgas und ein am Umgebungsluft-Austrittsbereich abgegebener Strom von erwärmter Umgebungsluft einander im Bereich einer außerhalb des Fahrzeugs liegenden Mischzone wenigstens bereichsweise durchdringen.

Die vorliegende Erfindung wird nachfolgend mit Bezug auf die beiliegenden Figuren detailliert beschrieben. Es zeigt:
- Fig. 1: in prinzipieller Darstellung ein Fahrzeug mit einem Brennstoffzellensystem;
- Fig. 2: eine alternative Ausgestaltung einer Umgebungsluft-Heizanordnung;
- Fig. 3: eine alternative Ausgestaltung des Fahrzeugs.

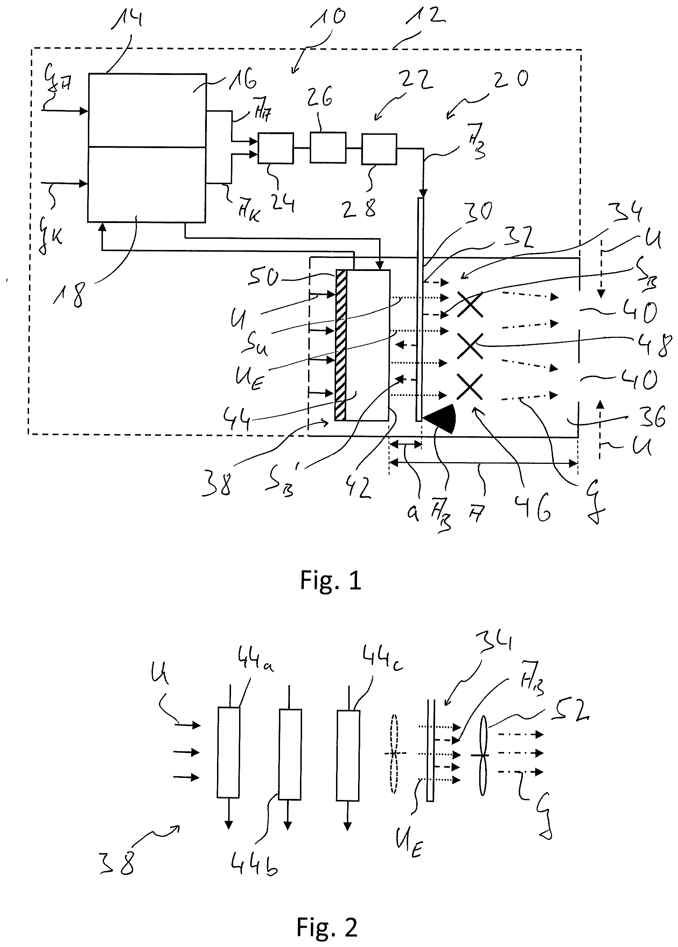

Die Fig. 1 zeigt ein allgemein mit 10 bezeichnetes Brennstoffzellensystem, das in einem Fahrzeug 12 zur Bereitstellung elektrischer Energie eingesetzt werden kann. Das Brennstoffzellensystem 10 umfasst eine Brennstoffzellenanordnung 14, die beispielsweise mit einem oder mehreren Brennstoffzellenstapeln aufgebaut sein kann und grundsätzlich einen mit Wasserstoff enthaltendem Anodengas G_{A} gespeisten Anodenbereich 16 und einen mit Sauerstoff enthaltendem Kathodengas G_{K} gespeisten Kathodenbereich 18 umfasst. Im Brennstoffzellenprozess wird unter Umsetzung des Anodengases G_{A} und des Kathodengases G_{K} einerseits elektrische Energie erzeugt und andererseits ein im Allgemeinen Restwasserstoff enthaltendes Anodenabgas A_{A} und ein im Allgemeinen Restsauerstoff enthaltendes Kathodenabgas A_{K} erzeugt. Abhängig vom Brennstoffzellentyp enthält primär das Anodenabgas A_{A} oder das Kathodenabgas A_{K} einen vergleichsweise hohen Anteil an Wasser bzw. Wasserdampf mit einer relativen Feuchte im Bereich von bis zu 90 bis 100%.

Der Brennstoffzellenanordnung 14 ist eine allgemein mit 20 bezeichnete Brennstoffzellenabgasanlage zugeordnet. Im dargestellten Beispiel nimmt die Brennstoffzellenabgasanlage 20 das Anodenabgas A_{A} und das Kathodenabgas A_{K} als Brennstoffzellenabgas A_{B} auf. Alternativ könnte die Brennstoffzellenabgasanlage 20 so aufgebaut sein, dass sie nur denjenigen der beiden die Brennstoffzellenanordnung 14 verlassenden Abgasströme aufnimmt, welcher stark bzw. stärker mit Wasser bzw. Wasserdampf angereichert ist.

In einem stromaufwärtigen Bereich der Brennstoffzellenabgasanlage 20 kann eine Brennstoffzellenabgas-Behandlungsanordnung 22 vorgesehen sein. Die Brennstoffzellenabgas-Behandlungsanordnung 22 kann beispielsweise einen Flüssigkeitsabscheider 24 umfassen, in welchem im Brennstoffzellenabgas A_{B} enthaltene, beispielsweise größere Flüssigkeitsansammlungen bzw. Flüssigkeitströpfchen ausgeschieden werden können und beispielsweise dem Brennstoffzellenprozess zugeführt werden können. Die Brennstoffzellenabgas-Behandlungsanordnung 22 kann zur Nachbehandlung des Brennstoffzellenabgases A_{B} einen Katalysator 26 umfassen und kann beispielsweise einen Schalldämpfer 28 aufweisen.

Es ist darauf hinzuweisen, dass andere oder zusätzliche Baugruppen der Brennstoffzellenabgas-Behandlungsanordnung 22 vorgesehen sein können oder einzelne der drei dargestellten Baugruppen der Brennstoffzellenabgas-Behandlungsanordnung 22 in der Brennstoffzellenabgasanlage 20 nicht vorhanden sein können oder in anderer Reihenfolge positioniert sein können.

Die Brennstoffzellenabgasanlage 20 umfasst ferner stromabwärts der Brennstoffzellenabgas-Behandlungsanordnung 22 einen Brennstoffzellenabgas-Austrittsbereich 34. **In** dem Brennstoffzellenabgas-Austrittsbereich 34 weist die Brennstoffzellenabgasanlage 20 zumindest eine, im dargestellten Ausgestaltungsbeispiel eine Mehrzahl von Brennstoffzellenabgas-Austrittsöffnungen 32 auf, über welche das Brennstoffzellenabgas A_{B} die Brennstoffzellenabgasanlage 20 verlässt. Beispielsweise kann der Brennstoffzellenabgas-Austrittsbereich 34 einen rohrartigen Endabschnitt 30 der Brennstoffzellenabgasanlage 20 umfassen, in welchem eine Mehrzahl der Brennstoffzellenabgas-Austrittsöffnungen 32 in dessen Längsrichtung, also auch in Strömungsrichtung, aufeinander folgend angeordnet sind oder/und um dessen Umfang verteilt angeordnet sind.

**In** dem in Figur 1 dargestellten Ausgestaltungsbeispiel ist der Brennstoffzellenabgas-Austrittsbereich 34 so positioniert, dass das Brennstoffzellenabgas A_{B} in ein beispielsweise einen Aggregatraum 36 in dem Fahrzeug 12 bereitstellendes Volumen abgegeben wird. **In** dem Aggregatraum 36 können andere Systembereiche des Fahrzeugs 12, wie zum Beispiel ein aus der Brennstoffzellenanordnung 14 bzw. einer Batterie gespeister Elektro-Antriebsmotor des Fahrzeugs 12, Komponenten der Fahrzeugelektronik bzw. auch eine nachfolgend erläuterte Umgebungsluft-Heizanordnung 38, angeordnet sein. Der Aggregatraum 36 ist grundsätzlich kein im Fahrzeug 12 abgekapseltes Volumen, sondern ist im Allgemeinen über mehrere Öffnungsbereiche 40 nach außen, also zur Umgebung offen. Über eine bewegbare Abschlussklappe, beispielsweise eine Motorhaube oder dergleichen, kann Zugang zu dem Aggregatraum 36 erhalten werden.

Die Umgebungsluft-Heizanordnung 38 dient dazu, Umgebungsluft U aufzunehmen und an einem Umgebungsluft-Austrittsbereich 42 als erwärmte Umgebungsluft U_{E} abzugeben. **In** einer vorteilhaften Ausgestaltung umfasst die Umgebungsluft-Heizanordnung 38 einen Wärmetauscher 44, welcher von einem in einem beispielsweise der Brennstoffzellenanordnung 14 zugeordneten und von dieser Wärme aufnehmenden Kühlkreislauf zirkulierenden Kühlmedium, im Allgemeinen einem flüssigen Kühlmedium, durchströmt wird. Beispielsweise kann der Wärmetauscher 44 durch einen in dem Fahrzeug 12 vorhandenen und vom Fahrtwind durchströmbaren Fahrzeugkühler bereitgestellt sein. In dem Wärmetauscher 28 nimmt die von außen aufgenommene Umgebungsluft U Wärme von dem Kühlmedium auf und strömt dann als erwärmte Umgebungsluft U_{E} in den Aggregatraum 36.

Der Brennstoffzellenabgas-Austrittsbereich 34 der Brennstoffzellenabgasanlage 20 ist bezüglich einer Umgebungsluft-Strömungsrichtung Su stromabwärts des Wärmetauschers 38 bzw. des Umgebungsluft-Austrittsbereichs 42 angeordnet. Die die Umgebungsluft-Heizanordnung 38 verlassende erwärmte Umgebungsluft U_{E} strömt somit in der Umgebungsluft-Strömungsrichtung Su auf den Brennstoffzellenabgas-Austrittsbereich 34 der Brennstoffzellenabgasanlage 20 zu bzw. strömt in einen Volumenbereich, in welchen auch das Brennstoffzellenabgas A_{B} aus dem Brennstoffzellenabgas-Austrittsbereich 34 abgegeben wird. In diesem Volumenbereich, im dargestellten Ausgestaltungsbeispiel also in dem Aggregatraum 36, durchmischen sich somit das Brennstoffzellenabgas A_{B} und die erwärmte Umgebungsluft U_{E}, so dass ein Gemisch G aus Brennstoffzellenabgas A_{B} und erwärmter Umgebungsluft U_{E} gebildet wird.

Die Fig. 1 veranschaulicht verschiedene Ausgestaltungen des Brennstoffzellenabgas-Austrittsbereichs 34 bzw. der Brennstoffzellenabgas-Austrittsöffnungen 32. Im oberen Bereich des Brennstoffzellenabgas-Austrittsbereichs 34 sind die Austrittsöffnungen 32 so positioniert, dass eine Brennstoffzellenabgas-Strömungsrichtung S_{B} im Wesentlichen der Umgebungsluft-Strömungsrichtung Su der erwärmten Umgebungsluft U_{E} entspricht. Dies bedeutet, dass diese beiden Strömungsrichtungen Su, S_{B} bzw. die Haupt-Strömungsrichtungen der beiden Gasströme zueinander im Wesentlichen parallel und gleichgerichtet sind. Im mittleren Bereich des Brennstoffzellenabgas-Austrittsbereichs 34 sind die Austrittsöffnungen 32 so angeordnet, dass die Brennstoffzellenabgas-Strömungsrichtung S_{B}' der Umgebungsluft-Strömungsrichtung Su im Wesentlichen entgegengesetzt ist, diese beiden Strömungsrichtungen Su, S_{B}' bzw. die Haupt-Strömungsrichtungen der beiden Gasströme zueinander also im Wesentlichen parallel und einander entgegengesetzt gerichtet sind. Im unteren Teil der Fig.1 ist veranschaulicht, dass an einer derartigen Brennstoffzellenabgas-Austrittsöffnung 32 das Brennstoffzellenabgas A_{B} nicht als im Wesentlichen gleichgerichteter Abgasstrahl, sondern in fächerartiger oder kegelartiger Konfiguration abgegeben wird. Auch dabei kann die im Wesentlichen einer Mittenlinie eines Abgabefächers bzw. Abgabekegels entsprechende Haupt-Strömungsrichtung entweder entgegengesetzt zur Umgebungsluft-Strömungsrichtung Su oder, wie dargestellt, zu dieser gleich gerichtet sein, oder kann in anderer Weise, beispielsweise orthogonal, zur Umgebungsluft-Strömungsrichtung Su angewinkelt sein.

Es ist darauf hinzuweisen, dass in dem Brennstoffzellenabgas-Austrittsbereich 34 alle Brennstoffzellenabgas-Austrittsöffnungen 32 eine der drei verschiedenen vorangehend beschriebenen und in Fig. 1 dargestellten Konfigurationen aufweisen können oder Brennstoffzellenabgas-Austrittsöffnungen 32 verschiedener Konfiguration vorgesehen sein können. Auch ist es möglich, die oder einen Teil der Brennstoffzellenabgas-Austrittsöffnungen 32 so zu orientieren, dass eine Abgabe quer zur Umgebungsluft-Strömungsrichtung Su der den Brennstoffzellenabgas-Austrittsbereich 34 umströmenden erwärmten Umgebungsluft U_{E} erfolgt, um auch dadurch die Durchmischung von Brennstoffzellenabgas A_{B} und erwärmter Umgebungsluft U_{E} zu unterstützen. Bei Ausgestaltung einer Brennstoffzellenabgas-Austrittsöffnung 32 zur Abgabe von Brennstoffzellenabgas A_{B} in fächerartiger oder kegelartiger Konfiguration kann der Brennstoffzellenabgas-Austrittsbereich 34 beispielsweise nur eine einzige Brennstoffzellenabgas-Austrittsöffnung 32 aufweisen, über welche das Brennstoffzellenabgas A_{B} mit einer Hauptströmungsrichtung im Wesentlichen orthogonal zur Umgebungsluft-Strömungsrichtung Su abgegeben wird, so dass die beiden Gasströme einander durchdringen.

Die Durchmischung von Brennstoffzellenabgas A_{B} und erwärmter Umgebungsluft U_{E} kann ferner durch eine stromabwärts des Brennstoffzellenabgas-Austrittsbereichs 34 angeordnete Brennstoffzellenabgas/Umgebungsluft-Mischanordnung 46 unterstützt werden. Diese kann einen oder mehrere Mischer 48 umfassen, welche beispielsweise mit für Verwirbelungen bzw. eine Strömungsumlenkung sorgenden Ablenkschaufeln ausgebildet sein können und dadurch eine effiziente Durchmischung des Brennstoffzellenabgases A_{B} mit der erwärmten Umgebungsluft U_{E} bewirken.

Durch das Mischen des eine hohe relative Feuchte aufweisenden Brennstoffzellenabgases A_{B} mit der eine vergleichsweise geringe relative Feuchte aufweisenden erwärmten Umgebungsluft U_{E} wird das Brennstoffzellenabgas/Umgebungsluft-Gemisch G mit einer relativen Feuchte bereitgestellt, die deutlich geringer ist als die relative Feuchte des Brennstoffzellenabgases A_{B} und einen Wert von weit unter 100% aufweist. Tritt das Brennstoffzellenabgas/Umgebungsluft-Gemisch G mit seiner deutlich unter einem Wert von 100% liegenden relativen Feuchte aus dem Aggregatraum 36 an den Öffnungsbereichen 40 zur Umgebung aus, kommt dieses bei einem Betrieb bei vergleichsweise niedriger Umgebungstemperatur spontan in Kontakt mit der kalten Umgebungsluft U. Dies führt dazu, dass durch die Vermischung des Brennstoffzellenabgas/Umgebungsluft-Gemisches G mit der vergleichsweise kalten Umgebungsluft U auch die Temperatur spontan abnimmt. Da die relative Feuchte des Brennstoffzellenabgas/Umgebungsluft-Gemisches G vor dieser Durchmischung mit der Umgebungsluft U deutlich unter 100% liegt, besteht die Möglichkeit, dass beim Absinken der Temperatur des Brennstoffzellenabgas/Umgebungsluft-Gemisches G bei der Durchmischung mit der kalten Umgebungsluft U die relative Feuchte den Wert von 100% übersteigt und damit eine Nebelbildung durch auskondensierendes Wasser entsteht, praktisch nicht.

Um die thermische Wechselwirkung der in den Wärmetauscher 44 eingeleiteten nicht erwärmten Umgebungsluft U mit dem Kühlmedium definiert einstellen zu können, kann dem Wärmetauscher 44 eine Strömungsdrosselanordnung 50 zugeordnet sein. Diese kann beispielsweise stromaufwärts des Wärmetauschers 44 eine Mehrzahl von zum Verändern der Durchströmbarkeit verstellbaren Lamellen umfassen. Durch Verschwenken der Lamellen und damit Verändern der Durchströmbarkeit der Strömungsdrosselanordnung 42 wird die Menge der den Wärmetauscher 44 durchströmenden Umgebungsluft U verändert. Wird weniger Umgebungsluft U in den Wärmetauscher 44 eingeleitet, wird die im Kühlmedium transportierte Wärme auf eine geringere Luftmenge übertragen, was zur Folge haben kann, dass die den Wärmetauscher 44 erwärmt verlassende Umgebungsluft U_{E} eine höhere Temperatur aufweist. Somit kann durch Regulierung der den Wärmetauscher 44 durchströmenden Luftmenge einerseits und damit der Temperatur der den Wärmetauscher 44 verlassenden erwärmten Umgebungsluft U_{E} andererseits auf Änderungen der relativen Luftfeuchte des Brennstoffzellenabgases A_{B} reagiert werden, um somit im Aggregatraum 36 ein Brennstoffzellenabgas/Umgebungsluft-Gemisch G mit minimal möglicher relativer Feuchte erzeugen zu können.

Durch das Einleiten des Brennstoffzellenabgases A_{B} und der erwärmten Umgebungsluft U_{E} in den Aggregatraum 36 kann gewährleistet werden, dass bereits vor dem Kontakt mit der nicht erwärmten bzw. kalten Umgebungsluft U eine gleichmäßige Durchmischung von erwärmter Umgebungsluft U_{E} und Brennstoffzellenabgas A_{B} vorliegt. Hierzu ist es besonders vorteilhaft, wenn ein Abstand a des Brennstoffzellenabgas-Austrittsbereichs 34 bzw. der Brennstoffzellenabgas-Austrittsöffnungen 32 vom Umgebungsluft-Austrittsbereich 42 nicht größer als 50 %, vorzugsweise nicht größer als 10 %, eines Abstands A der Öffnungsbereiche 40 vom Umgebungsluft-Austrittsbereich 42 ist, an welchen Öffnungsbereichen 40 beispielsweise im Bereich eines Unterbodens des Fahrzeugs 12 oder in seitlichen Bereichen oder im Heckbereich des Fahrzeugs das Brennstoffzellenabgas/Umgebungsluft-Gemisch G in die Umgebung austritt und in Kontakt mit der kalten Umgebungsluft U kommt. Beispielsweise kann der Abstand a derjenige Abstand sein, welchen die vom Umgebungsluft-Austrittsbereich 42 am weitesten entfernt liegende Brennstoffzellenabgas-Austrittsöffnung 32 zum Umgebungsluft-Austrittsbereich 42 aufweist. Der Abstand A kann beispielsweise derjenige Abstand sein, welchen der dem Umgebungsluft-Austrittsbereich 42 nächstliegende Öffnungsbereich 40 zum Umgebungsluft-Austrittsbereich 42 aufweist.

**In** einer in Fig. 2 veranschaulichten weiteren Ausgestaltungsvariante der Umgebungsluft-Heizanordnung 38 kann diese eine Mehrzahl von Wärmetauschern 44a, 44b, 44c aufweisen, welche von der zu erwärmenden Umgebungsluft U nacheinander, also seriell durchströmt werden. Die Wärmetauscher 44a, 44b, 44c können verschiedenen Kühlkreisläufen zugeordnet sein, die dazu vorgesehen sein können, in dem Fahrzeug 12 verschiedene Systembereiche voneinander unabhängig zu kühlen bzw. voneinander unabhängig auf definierten Temperaturniveaus zu halten. Beispielsweise kann der am weitesten stromaufwärts positionierte Wärmetauscher 44a, auf welchen die zu erwärmende Umgebungsluft U zuerst auftrifft, ein Niedertemperatur-Wärmetauscher sein, während der Wärmetauscher 44b ein Mitteltemperatur-Wärmetauscher sein kann und der Wärmetauscher 44c ein Hochtemperaturwärmetauscher sein kann, welcher beispielsweise dazu vorgesehen ist, Wärme von der Brennstoffzellenanordnung 14 abzuführen bzw. diese auf einem definierten Temperaturniveau zu halten. Dies bedeutet, dass die Temperatur der die Wärmetauscher 44a, 44b, 44c durchströmenden Kühlmedien in der Strömungsrichtung der zu erwärmenden Umgebungsluft U zunimmt. Stromabwärts des Wärmetauschers 44c mit der höchsten Kühlmediumtemperatur ist der Brennstoffzellenabgas-Austrittsbereich 34 zur Abgabe des Brennstoffzellenabgases A_{B} in die diesen umströmende erwärmte Umgebungsluft U_{E} positioniert.

Die Fig. 2 veranschaulicht weiter, dass zum Unterstützen oder zum Erzeugen des Stroms der zu erwärmenden bzw. der erwärmten Umgebungsluft ein Umgebungsluftgebläse 52 vorgesehen sein kann. Damit kann insbesondere auch bei stehendem Fahrzeug 12 für eine ausreichende Durchströmung der Umgebungsluft-Heizanordnung 38 und somit für die Bereitstellung einer ausreichenden Menge an erwärmter Umgebungsluft U_{E} gesorgt werden. Vor allem dann, wenn die Umgebungsluft-Heizanordnung 38 beispielsweise an einem Bus oder einem Zug bzw. einer Lokomotive so positioniert ist, dass diese nicht direkt vom Fahrtwind angeströmt wird, ist das Umgebungsluftgebläse 52 zum Erzeugen eines ausreichenden Umgebungsluftstroms besonders vorteilhaft.

Während grundsätzlich das Umgebungsluftgebläse 52 auch stromaufwärts der Umgebungsluft-Heizanordnung 38, also stromaufwärts des bzw. aller Wärmetauscher derselben, angeordnet werden kann, ist die Positionierung unmittelbar stromabwärts des Brennstoffzellenabgas-Austrittsbereichs 34 besonders vorteilhaft, da dann die durch das Umgebungsluftgebläse 52 generierte Verwirbelung der erwärmten Umgebungsluft U_{E} die Durchmischung mit dem Brennstoffzellenabgas A_{B} unterstützt. Dieser Effekt kann auch erreicht werden, wenn, wie in Figur 2 mit Strichlinie angedeutet, dass Umgebungsluftgebläse 52 in der Strömungsrichtung der erwärmten Umgebungsluft U_{E} stromabwärts der Umgebungsluft-Heizanordnung 38 und stromaufwärts des Brennstoffzellenabgas-Austrittsbereichs 34 positioniert ist.

In einer weiteren Variante eines erfindungsgemäß aufgebauten Fahrzeugs können grundsätzlich der Brennstoffzellenabgas-Austrittsbereich 34 und der Umgebungsluft-Austrittsbereich 42 am Fahrzeug 12 so positioniert sein, dass diese das Brennstoffzellenabgas A_{B} bzw. die erwärmte Umgebungsluft U_{E} nicht in einen im Fahrzeug 12 gebildeten, zur Umgebung grundsätzlich offenen Volumenbereich, wie zum Beispiel den Aggregatraum 36, abgeben, sondern die beiden Gasströme beispielsweise unmittelbar benachbart zueinander im Wesentlichen direkt in die Umgebung bzw. die nicht erwärmte Umgebungsluft U abgeben, so dass die beiden Gasströme sich im Wesentlichen erst in der Umgebung, also außerhalb des Fahrzeugs 12, vermischen. Um dabei eine ausreichende Absenkung der relativen Feuchte des Brennstoffzellenabgases zu gewährleisten, ist es vorteilhaft, wenn die Menge der abgegebenen erwärmten Umgebungsluft U_{E} deutlich größer ist, als die Menge des abgegebenen Brennstoffzellenabgases A_{B}. Auch die Abgabe der beiden Gasströme derart, dass beispielsweise der Strom des Brennstoffzellenabgases A_{B} von einem Mantelstrom aus erwärmter Umgebungsluft U_{E} umgeben zur Umgebung abgegeben wird, kann bei derartiger Ausgestaltung eine zur ausreichenden Senkung der relativen Feuchte führende Durchmischung von Brennstoffzellenabgas A_{B} und erwärmter Umgebungsluft U_{E} unterstützen.

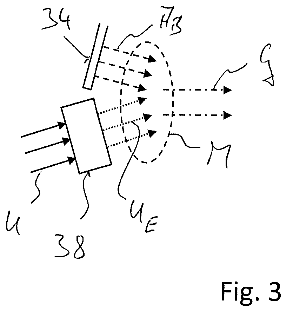

Die Fig.3 veranschaulicht eine derartige Ausgestaltungsform, bei welcher die Umgebungsluft-Heizanordnung 38 und der Brennstoffzellenabgas-Austrittsbereich 34 derart nahe beieinander bzw. nebeneinander positioniert sind, dass die von diesen abgegebenen Gasströme im Wesentlichen nebeneinander in den in Fig. 3 als eine Mischzone M angedeuteten Volumenbereich eingeleitet werden. Die Ströme von Brennstoffzellenabgas A_{B} und erwärmter Umgebungsluft U_{E} durchdringen einander im Bereich der Mischzone M, wodurch das Brennstoffzellenabgas/Umgebungsluft-Gemisch G entsteht.

Wie vorangehend dargelegt, kann eine derartige Mischzone M außerhalb des Fahrzeugs 12 liegen, kann jedoch auch innerhalb des Fahrzeugs 12, beispielsweise in einem dem Aggregatraum 36 entsprechenden Bereich in einem von einer Mantelfläche des Fahrzeugs umgrenzten Volumen liegen.

Während bei einer derartigen Ausgestaltung die in Fig. 3 erkennbare angewinkelte Positionierung der Umgebungsluft-Heizeinheit 38 bzw. des Brennstoffzellenabgas-Austrittsbereichs 34 zueinander zum Erreichen der einander durchdringenden Gasströme besonders vorteilhaft ist, ist es grundsätzlich auch möglich, die Umgebungsluft-Heizeinheit 38 und den Brennstoffzellenabgas-Austrittsbereich 34 so bezüglich einander anzuordnen, dass die Strömungsrichtungen S_{B}, Su zueinander im Wesentlichen parallel sind. Vor allem dann, wenn bei einer derartigen Ausgestaltung die Mischzone M außerhalb des Fahrzeugs 12, beispielsweise unter dem Unterboden desselben, liegt, kann die Durchmischung von Brennstoffzellenabgas A_{B} und erwärmter Umgebungsluft U_{E} durch die die beiden Gasströme aufnehmende Umgebungsluft herbeigeführt bzw. unterstützt werden, welche bei fahrendem Fahrzeug 12 eine zu einer Verwirbelung führende Relativgeschwindigkeit bezüglich der beiden Gasströme hat.

Bei einer weiteren alternativen Ausgestaltung können die Umgebungsluft-Heizanordnung 38 und der Brennstoffzellenabgas-Austrittsbereich 34 so bezüglich einander angeordnet sein, dass der Brennstoffzellenabgas-Austrittsbereich 34 bezüglich der Umgebungsluft-Strömungsrichtung Su stromaufwärts der Umgebungsluft-Heizanordnung 38 bzw. des Umgebungsluft-Austrittsbereichs 42 derselben angeordnet ist. Das Brennstoffzellenabgas A_{B} kann dabei so geführt werden, dass es die Umgebungsluft-Heizanordnung 38, also beispielsweise den Wärmetauscher 44, zwar umströmt, darin jedoch nicht erwärmt wird. Stromabwärts des Umgebungsluft-Austrittsbereichs 42 durchmischen sich dann das Brennstoffzellenabgas A_{B} und die am Umgebungsluft-Austrittsbereich 42 austretende erwärmte Umgebungsluft U_{E}.

## Patentansprüche

1. Fahrzeug, umfassend:
- ein Brennstoffzellensystem (10) mit einer Brennstoffzellenanordnung (14) und einer Brennstoffzellenabgas (A_{B}) aus der Brennstoffzellenanordnung (14) aufnehmenden Brennstoffzellenabgasanlage (20), wobei die Brennstoffzellenabgasanlage (20) einen Brennstoffzellenabgas-Austrittsbereich (34) zur Abgabe von Brennstoffzellenabgas (A_{B}) aus der Brennstoffzellenabgasanlage (20) aufweist,
- eine Umgebungsluft-Heizanordnung (38) zur Erwärmung von mit wenigstens einem Teil des Brennstoffzellenabgases (A_{B}) zu durchmischender Umgebungsluft (U), wobei die Umgebungsluft-Heizanordnung (38) einen Umgebungsluft-Austrittsbereich (42) zur Abgabe von in der Umgebungsluft-Heizanordnung (38) erwärmter Umgebungsluft (U_{E}) aufweist,
wobei:
- der Brennstoffzellenabgas-Austrittsbereich (34) bezüglich einer Umgebungsluft-Strömungsrichtung (Su) der am Umgebungsluft-Austrittsbereich (42) von der Umgebungsluft-Heizanordnung (38) abgegebenen erwärmten Umgebungsluft (U_{E}) stromabwärts des Umgebungsluft-Austrittsbereichs (42) positioniert ist,
oder
- der Brennstoffzellenabgas-Austrittsbereich (34) bezüglich der Umgebungsluft-Strömungsrichtung (Su) der am Umgebungsluft-Austrittsbereich (42) von der Umgebungsluft-Heizanordnung (38) abgegebenen erwärmten Umgebungsluft (U_{E}) stromaufwärts des Umgebungsluft-Austrittsbereichs (42) positioniert ist,
oder/und
- der Brennstoffzellenabgas-Austrittsbereich (34) und der Umgebungsluft-Austrittsbereich (42) derart positioniert sind, dass ein am Brennstoffzellenabgas-Austrittsbereich (34) abgegebener Strom von Brennstoffzellenabgas (A_{B}) und ein am Umgebungsluft-Austrittsbereich (42) abgegebener Strom von erwärmter Umgebungsluft (U_{E}) einander wenigstens bereichsweise durchdringen,
**dadurch gekennzeichnet, dass** der Umgebungsluft-Austrittsbereich (42) zur Abgabe von erwärmter Umgebungsluft (UE) in einen über eine Mehrzahl von Öffnungsbereichen (40) zur Umgebung offenen, einen Antriebsmotor oder/und Teile einer Fahrzeugelektronik enthaltenden Aggregatraum (36) des Fahrzeugs (12) angeordnet ist, und dass der Brennstoffzellenabgas-Austrittsbereich (34) zur Abgabe von Brennstoffzellenabgas (A_{B}) in den Aggregatraum (36) in Abstand zu dem Umgebungsluft-Austrittsbereich (42) angeordnet ist, so dass das Brennstoffzellenabgas (A_{B}) und die erwärmte Umgebungsluft (U_{E}) sich in dem Aggregatsraum (36) zum Bilden eines Gemisches (G) aus Brennstoffzellenabgas (A_{B}) und erwärmter Umgebungsluft (U_{E}) durchmischen.

2. Fahrzeug nach Anspruch 1, **dadurch gekennzeichnet, dass** die Umgebungsluft-Heizanordnung (38) wenigstens einen von der zu erwärmenden Umgebungsluft (U) und einem in einem Kühlkreislauf strömenden Kühlmedium durchströmbaren Wärmetauscher (44) zur Übertragung von in dem Kühlmedium enthaltener Wärme auf die zu erwärmende Umgebungsluft (U) umfasst.

3. Fahrzeug nach Anspruch 2, **dadurch gekennzeichnet, dass** die Umgebungsluft-Heizanordnung (38) eine Mehrzahl von von der zu erwärmenden Umgebungsluft (U) seriell durchströmbaren Wärmetauschern (44a, 44b, 44c) umfasst, vorzugsweise wobei der Brennstoffzellenabgas-Austrittsbereich (34) stromabwärts eines bezüglich einer Strömungsrichtung der zu erwärmenden Umgebungsluft (U) am weitesten stromabwärts positionierten Wärmetauschers (44c) der Mehrzahl von Wärmetauschern (44a, 44b, 44c) positioniert ist.

4. Fahrzeug nach einem der Ansprüche 1-3, **dadurch gekennzeichnet, dass** der Umgebungsluft-Heizanordnung (38) eine Strömungsdrosselanordnung (50) zur Drosselung der durch die Umgebungsluft-Heizanordnung (38) hindurchströmenden Menge der zu erwärmenden Umgebungsluft (U) zugeordnet ist.

5. Fahrzeug nach einem der Ansprüche 1-4, **dadurch gekennzeichnet, dass** der Brennstoffzellenabgas-Austrittsbereich (34) wenigstens eine Brennstoffzellenabgas-Austrittsöffnung (32) aufweist.

6. Fahrzeug nach Anspruch 5, **dadurch gekennzeichnet, dass**:
- wenigstens eine, vorzugsweise jede Brennstoffzellenabgas-Austrittsöffnung (32) zur Abgabe von Brennstoffzellenabgas (A_{B}) in einer der Umgebungsluft-Strömungsrichtung (Su) im Wesentlichen entsprechenden Brennstoffzellenabgas-Strömungsrichtung (S_{B}) ausgebildet ist,
oder/und
- wenigstens eine, vorzugsweise jede Brennstoffzellenabgas-Austrittsöffnung (32) zur Abgabe von Brennstoffzellenabgas (A_{B}) in einer der Umgebungsluft-Strömungsrichtung (Su) im Wesentlichen entgegengesetzten Brennstoffzellenabgas-Strömungsrichtung (S_{B}') ausgebildet ist,
oder/und
- wenigstens eine, vorzugsweise jede Brennstoffzellenabgas-Austrittsöffnung (32) zur Abgabe eines fächerartig oder kegelartig aufgeweiteten Brennstoffzellenabgasstroms ausgebildet ist.

7. Fahrzeug nach einem der Ansprüche 1-6, **dadurch gekennzeichnet, dass** bezüglich der Umgebungsluft-Strömungsrichtung (Su) stromabwärts des Brennstoffzellenabgas-Austrittsbereichs (34) eine Mischanordnung (46) mit wenigstens einem Umgebungsluft/Brennstoffzellenabgas-Mischer (48) angeordnet ist.

8. Fahrzeug nach einem der Ansprüche 1-7, **dadurch gekennzeichnet, dass** ein Abstand (a) des Brennstoffzellenabgas-Austrittsbereichs (34) von dem Umgebungsluft-Austrittsbereich (42) kleiner als 50 %, vorzugsweise kleiner als 10 %, eines Abstands (A) des wenigstens einen Öffnungsbereich (40) von dem Umgebungsluft-Austrittsbereich (42) ist.

9. Fahrzeug nach einem der Ansprüche 1-8, **dadurch gekennzeichnet, dass** der Umgebungsluft-Heizanordnung (38) ein Umgebungsluftgebläse (52) zum Fördern von zu erwärmender Umgebungsluft (U) oder/und erwärmter Umgebungsluft (U_{E}) zugeordnet ist, und dass das Umgebungsluftgebläse (52) bezüglich der Umgebungsluft-Strömungsrichtung (Us) stromabwärts der Umgebungsluft-Heizanordnung (38) angeordnet ist.

10. Fahrzeug nach Anspruch 9, **dadurch gekennzeichnet, dass** das Umgebungsluftgebläse (52) bezüglich der Umgebungsluft-Strömungsrichtung (Us) stromabwärts des Brennstoffzellenabgas-Austrittsbereichs (34) angeordnet ist.

11. Fahrzeug nach einem der Ansprüche 1-10, **dadurch gekennzeichnet, dass** die Brennstoffzellenabgasanlage (20) eine Brennstoffzellenabgas-Behandlungsanordnung (22) umfasst, wobei die Brennstoffzellenabgas-Behandlungsanordnung (22) wenigstens eine der folgenden Baugruppen umfasst:
- Flüssigkeitsabscheider (24),
- Katalysator (26),
- Schalldämpfer (28).

12. Verfahren zum Betreiben eines Brennstoffzellensystems in einem Fahrzeug nach einem der Ansprüche 1-11, bei welchem Verfahren ein Gemisch (G) aus Umgebungsluft (U) und an einem Brennstoffzellenabgas-Austrittsbereich (34) einer einer Brennstoffzellenanordnung (14) des Brennstoffzellensystems zugeordneten Brennstoffzellenabgasanlage (20) abgegebenem Brennstoffzellenabgas (A_{B}) erzeugt wird, wobei wenigstens ein Teil der dem Brennstoffzellenabgas (A_{B}) beigemischten Umgebungsluft (U) vor Vermischung mit dem Brennstoffzellenabgas (A_{B}) erwärmt wird, wobei die erwärmte Umgebungsluft (U_{E}) und das Brennstoffzellenabgas (A_{B}) in den zur Umgebung offenen Aggregatraum (36) des Fahrzeugs (12) abgegeben werden und das Gemisch (G) aus Brennstoffzellenabgas (A_{B}) und erwärmter Umgebungsluft (U_{E}) im Wesentlichen in dem Aggregatraum (36) gebildet wird.

13. Verfahren nach Anspruch 12, **dadurch gekennzeichnet, dass** die mit dem Brennstoffzellenabgas (A_{B}) zu mischende erwärmte Umgebungsluft (U_{E}) in wenigstens einem Wärmetauscher (44) durch thermische Wechselwirkung mit einem in einem Kühlkreislauf des Fahrzeugs (12) strömenden Kühlmedium erwärmt wird.

14. Verfahren nach Anspruch 13, **dadurch gekennzeichnet, dass** zur Einstellung einer Temperatur der in dem wenigstens einen Wärmetauscher zu erwärmenden Umgebungsluft (U) ein Massenstrom der den wenigstens einen Wärmetauscher (44) durchströmenden Umgebungsluft (U) oder/und ein Massenstrom des den wenigstens einen Wärmetauscher (44) durchströmenden Kühlmediums verändert wird.

15. Fahrzeug, umfassend:
- ein Brennstoffzellensystem (10) mit einer Brennstoffzellenanordnung (14) und einer Brennstoffzellenabgas (A_{B}) aus der Brennstoffzellenanordnung (14) aufnehmenden Brennstoffzellenabgasanlage (20), wobei die Brennstoffzellenabgasanlage (20) einen Brennstoffzellenabgas-Austrittsbereich (34) zur Abgabe von Brennstoffzellenabgas (A_{B}) aus der Brennstoffzellenabgasanlage (20) aufweist,
- eine Umgebungsluft-Heizanordnung (38) zur Erwärmung von mit wenigstens einem Teil des Brennstoffzellenabgases (A_{B}) zu durchmischender Umgebungsluft (U), wobei die Umgebungsluft-Heizanordnung (38) einen Umgebungsluft-Austrittsbereich (42) zur Abgabe von in der Umgebungsluft-Heizanordnung (38) erwärmter Umgebungsluft (U_{E}) aufweist,
**dadurch gekennzeichnet, dass** der Brennstoffzellenabgas-Austrittsbereich (34) und der Umgebungsluft-Austrittsbereich (42) derart positioniert sind, dass ein am Brennstoffzellenabgas-Austrittsbereich (34) abgegebener Strom von Brennstoffzellenabgas (A_{B}) und ein am Umgebungsluft-Austrittsbereich (42) abgegebener Strom von erwärmter Umgebungsluft (U_{E}) einander im Bereich einer außerhalb des Fahrzeugs (12) liegenden Mischzone (M) wenigstens bereichsweise durchdringen.

## Claims

1. A vehicle, comprising:
- a fuel cell system (10) with a fuel cell arrangement (14) and a fuel cell exhaust gas system (20) receiving fuel cell exhaust gas (As) from the fuel cell arrangement (14), wherein the fuel cell exhaust gas system (20) has a fuel cell exhaust gas outlet region (34) for discharging fuel cell exhaust gas (A_{B}) from the fuel cell exhaust gas system (20),
- an ambient air heating arrangement (38) for heating ambient air (U) to be mixed with at least part of the fuel cell exhaust gas (As), wherein the ambient air heating arrangement (38) has an ambient air outlet region (42) for discharging ambient air (U_{E}) heated in the ambient air heating arrangement (38),
wherein:
- the fuel cell exhaust gas outlet region (34) is positioned downstream of the ambient air outlet region (42) with respect to an ambient air flow direction (S_{U}) of the heated ambient air (U_{E}) discharged from the ambient air heating arrangement (38) at the ambient air outlet region (42),
or
- the fuel cell exhaust gas outlet region (34) is positioned upstream of the ambient air outlet region (42) with respect to the ambient air flow direction (S_{U}) of the heated ambient air (U_{E}) discharged from the ambient air heating arrangement (38) at the ambient air outlet region (42),
or/and
- the fuel cell exhaust gas outlet region (34) and the ambient air outlet region (42) are positioned in such a manner that a flow of fuel cell exhaust gas (A_{B}) discharged at the fuel cell exhaust gas outlet region (34) and a flow of heated ambient air (U_{E}) discharged at the ambient air outlet region (42) permeate each other at least in some regions,
**characterized in that** the ambient air outlet region (42) is provided for discharging heated ambient air (U_{E}) into an equipment compartment (36) of the vehicle (12) that is open to the environment via a plurality of opening regions (40) comprising a drive motor or/and parts of a vehicle electronics, and **in that** the fuel cell exhaust gas outlet region (34) is arranged for discharging fuel cell exhaust gas (A_{B}) into the equipment compartment (36) at a distance to the ambient air outlet region (42), so that the fuel cell exhaust gas (A_{B}) and the heated ambient air (U_{E}) become mixed inside the equipment compartment (36) for forming a mixture (G) of fuel cell exhaust gas (As) and heated ambient air (U_{E}).

2. The vehicle as claimed in claim 1, **characterized in that** the ambient air heating arrangement (38) comprises at least one heat exchanger (44), through which the ambient air (U) to be heated and a cooling medium flowing in a cooling circuit can flow, for transmitting heat contained in the cooling medium to the ambient air (U) to be heated.

3. The vehicle as claimed in claim 2, **characterized in that** the ambient air heating arrangement (38) comprises a plurality of heat exchangers (44a, 44b, 44c), through which the ambient air (U) to be heated can flow in series, preferably wherein the fuel cell exhaust gas outlet region (34) is positioned downstream of a heat exchanger (44c), which is positioned furthest downstream, of the plurality of heat exchangers (44a, 44b, 44c) with respect to a flow direction of the ambient air (U) to be heated.

4. The vehicle as claimed in any one of claims 1-3, **characterized in that** the ambient air heating arrangement (38) is assigned a flow throttle arrangement (50) for restricting the amount of ambient air (U) to be heated that flows through the ambient air heating arrangement (38).

5. The vehicle as claimed in any one of claims 1-4, **characterized in that** the fuel cell exhaust gas outlet region (34) has at least one fuel cell exhaust gas outlet opening (32).

6. The vehicle as claimed in claim 5, **characterized in that**:
- at least one, preferably each fuel cell exhaust gas outlet opening (32) is designed for discharging fuel cell exhaust gas (A_{B}) in a fuel cell exhaust gas flow direction (S_{B}) substantially corresponding to the ambient air flow direction (S_{U}),
or/and
- at least one, preferably each fuel cell exhaust gas outlet opening (32) is designed for discharging fuel cell exhaust gas (A_{B}) in a fuel cell exhaust gas flow direction (S_{B}') substantially opposite to the ambient air flow direction (S_{U}),
or/and
- at least one, preferably each fuel cell exhaust gas outlet opening (32) is designed for discharging a fuel cell exhaust gas flow which is expanded in the manner of a fan or in the manner of a cone.

7. The vehicle as claimed in any one of claims 1-6, **characterized in that** a mixing arrangement (46) with at least one ambient air/fuel cell exhaust gas mixer (48) is arranged downstream of the fuel cell exhaust gas outlet region (34) with respect to the ambient air flow direction (S_{U}).

8. The vehicle as claimed in one of claims 1-7, **characterized in that** a distance (a) of the fuel cell exhaust gas outlet region (34) from the ambient air outlet region (42) is less than 50 %, preferably less than 10 %, of a distance (A) of the at least one opening region (40) from the ambient air outlet region (42).

9. The vehicle according to one of claims 1-8, **characterized in that** the ambient air heating arrangement (38) is assigned an ambient air fan (52) for conveying ambient air (U) to be heated or/and heated ambient air (U_{E}), and **in that** the ambient air fan (52) is arranged downstream of the ambient air heating arrangement (38) with respect to the ambient air flow direction (U_{S}).

10. The vehicle as claimed in claim 9, **characterized in that** the ambient air fan (52) is arranged downstream of the fuel cell exhaust gas outlet region (34) with respect to the ambient air flow direction (U_{S}).

11. The vehicle as claimed in any one of claims 1-10, **characterized in that** the fuel cell exhaust gas system (20) comprises a fuel cell exhaust gas treatment arrangement (22), wherein the fuel cell exhaust gas treatment arrangement (22) comprises at least one of the following assemblies:
- a liquid separator (24),
- a catalytic converter (26),
- a muffler (28).

12. A method for operating a fuel cell system in a vehicle as claimed in any one of claims 1-11, in which method a mixture (G) of ambient air (U) and fuel cell exhaust gas (A_{B}) which is discharged at a fuel cell exhaust gas outlet region (34) of a fuel cell exhaust gas system (20), which is assigned to a fuel cell arrangement (14) of the fuel cell system, is generated, wherein at least part of the ambient air (U) admixed with the fuel cell exhaust gas (A_{B}) is heated before mixing with the fuel cell exhaust gas (A_{B}), wherein the heated ambient air (U_{E}) and the fuel cell exhaust gas (As) are discharged into an equipment compartment (36) of the vehicle (12) that is open to the environment, and wherein the mixture (G) of fuel cell exhaust gas (As) and heated ambient air (U_{E}) is substantially formed in the equipment compartment (36).

13. The method as claimed in claim 12, **characterized in that** the heated ambient air (U_{E}) to be mixed with the fuel cell exhaust gas (A_{B}) is heated in at least one heat exchanger (44) by thermal interaction with a cooling medium flowing in a cooling circuit of the vehicle (12).

14. The method as claimed in claim 13, **characterized in that**, in order to adjust a temperature of the ambient air (U) to be heated in the at least one heat exchanger, a mass flow of the ambient air (U) flowing through the at least one heat exchanger (44) or/and a mass flow of the cooling medium flowing through the at least one heat exchanger (44) is changed.

15. A vehicle, comprising:
- a fuel cell system (10) with a fuel cell arrangement (14) and a fuel cell exhaust gas system (20) receiving fuel cell exhaust gas (As) from the fuel cell arrangement (14), wherein the fuel cell exhaust gas system (20) has a fuel cell exhaust gas outlet region (34) for discharging fuel cell exhaust gas (A_{B}) from the fuel cell exhaust gas system (20),
- an ambient air heating arrangement (38) for heating ambient air (U) to be mixed with at least part of the fuel cell exhaust gas (As), wherein the ambient air heating arrangement (38) has an ambient air outlet region (42) for discharging ambient air (U_{E}) heated in the ambient air heating arrangement (38),
**characterized in that** he fuel cell exhaust gas outlet region (34) and the ambient air outlet region (42) are positioned in such a manner that a flow of fuel cell exhaust gas (A_{B}) discharged at the exhaust gas outlet region (34) and a flow of heated ambient air (U_{E}) discharged at the ambient air outlet region (42) at least partly permeate each other in the region of a mixing zone (M) located outside the vehicle (12).

## Revendications

1. Un véhicule, comprenant :
- un système de pile à combustible (10) comprenant un ensemble de piles à combustible (14) et un système d'échappement de gaz de pile à combustible (20) recevant des gaz d'échappement de pile à combustible (As) provenant de l'ensemble de piles à combustible (14), dans lequel le système d'échappement de gaz de pile à combustible (20) comporte une zone de sortie de gaz d'échappement de pile à combustible (34) pour évacuer les gaz d'échappement de pile à combustible (A_{B}) hors du système d'échappement de la pile à combustible (20),
- un dispositif de chauffage d'air ambiant (38) destiné à chauffer de l'air ambiant (U) à mélanger avec au moins une partie des gaz d'échappement de pile à combustible (As), dans lequel le dispositif de chauffage d'air ambiant (38) comporte une zone de sortie d'air ambiant (42) pour évacuer l'air ambiant (U_{E}) chauffé dans le dispositif de chauffage d'air ambiant (38),
dans lequel :
- la zone de sortie des gaz d'échappement de pile à combustible (34) est positionnée en aval de la zone de sortie d'air ambiant (42) par rapport à une direction d'écoulement d'air ambiant (S_{U}) de l'air ambiant chauffé (U_{E}) évacué du dispositif de chauffage d'air ambiant (38) au niveau de la zone de sortie d'air ambiant (42),
ou
- la zone de sortie des gaz d'échappement de pile à combustible (34) est positionnée en amont de la zone de sortie d'air ambiant (42) par rapport à la direction d'écoulement d'air ambiant (S_{U}) de l'air ambiant chauffé (U_{E}) évacué du dispositif de chauffage d'air ambiant (38) au niveau de la zone de sortie d'air ambiant (42),
ou/et
- la zone de sortie des gaz d'échappement de pile à combustible (34) et la zone de sortie d'air ambiant (42) sont positionnées de telle manière qu'un flux de gaz d'échappement de pile à combustible (As) évacué au niveau de la zone de sortie des gaz d'échappement de pile à combustible (34) et un flux d'air ambiant chauffé (U_{E}) évacué au niveau de la zone de sortie d'air ambiant (42) se mélangent au moins dans certaines zones,
**caractérisé en ce que** la zone de sortie d'air ambiant (42) est prévue pour évacuer de l'air ambiant chauffé (U_{E}) dans un compartiment d'équipement (36) du véhicule (12) qui est ouvert sur l'environnement via une pluralité de zones d'ouverture (40) comprenant un moteur d'entraînement et/ou des composants de l'électronique du véhicule, et **en ce que** la zone de sortie des gaz d'échappement de pile à combustible (34) est agencée pour évacuer les gaz d'échappement de pile à combustible (A_{B}) dans le compartiment d'équipement (36) à une certaine distance de la zone de sortie d'air ambiant (42), de sorte que les gaz d'échappement de pile à combustible (A_{B}) et l'air ambiant chauffé (U_{E}) se mélangent à l'intérieur du compartiment d'équipement (36) pour former un mélange (G) de gaz d'échappement de pile à combustible (A_{B}) et d'air ambiant chauffé (U_{E}).

2. Le véhicule selon la revendication 1, **caractérisé en ce que** le dispositif de chauffage d'air ambiant (38) comprend au moins un échangeur de chaleur (44), à travers lequel peuvent s'écouler l'air ambiant (U) à chauffer et un fluide de refroidissement circulant dans un circuit de refroidissement, afin de transférer la chaleur contenue dans le fluide de refroidissement à l'air ambiant (U) à chauffer.

3. Le véhicule selon la revendication 2, **caractérisé en ce que** le dispositif de chauffage d'air ambiant (38) comprend une pluralité d'échangeurs de chaleur (44a, 44b, 44c), à travers lesquels l'air ambiant (U) à chauffer peut s'écouler en série, de préférence dans lequel la zone de sortie des gaz d'échappement de pile à combustible (34) est positionnée en aval d'un échangeur de chaleur (44c), qui est positionné le plus en aval, parmi la pluralité d'échangeurs de chaleur (44a, 44b, 44c) par rapport à un sens d'écoulement de l'air ambiant (U) à chauffer.

4. Le véhicule selon l'une quelconque des revendications 1 à 3, **caractérisé en ce qu'**un dispositif d'étranglement de débit (50) est associé au dispositif de chauffage d'air ambiant (38) afin de limiter la quantité d'air ambiant (U) à chauffer qui s'écoule à travers le dispositif de chauffage d'air ambiant (38).

5. Le véhicule selon l'une quelconque des revendications 1 à 4, **caractérisé en ce que** la zone de sortie des gaz d'échappement de pile à combustible (34) comporte au moins une ouverture de sortie des gaz d'échappement de pile à combustible (32).

6. Le véhicule selon la revendication 5, **caractérisé en ce que** :
- au moins une, de préférence chaque ouverture de sortie des gaz d'échappement de pile à combustible (32) est conçue pour évacuer les gaz d'échappement de pile à combustible (As) dans une direction d'écoulement des gaz d'échappement de pile à combustible (S_{B}) correspondant sensiblement à la direction d'écoulement d'air ambiant (S_{U}),
ou/et
- au moins une, de préférence chaque ouverture de sortie des gaz d'échappement de pile à combustible (32) est conçue pour évacuer les gaz d'échappement de pile à combustible (As) dans une direction d'écoulement des gaz d'échappement de pile à combustible (S_{B}') sensiblement opposée à la direction d'écoulement d'air ambiant (S_{U}),
ou/et
- au moins une, de préférence chaque ouverture de sortie des gaz d'échappement de pile à combustible (32) est conçue pour évacuer un flux de gaz d'échappement de pile à combustible qui s'étend à la manière d'un ventilateur ou à la manière d'un cône.

7. Le véhicule selon l'une quelconque des revendications 1 à 6, **caractérisé en ce qu'**un dispositif de mélange (46) comprenant au moins un mélangeur d'air ambiant/gaz d'échappement de pile à combustible (48) est disposé en aval de la zone de sortie des gaz d'échappement de pile à combustible (34) par rapport à la direction d'écoulement d'air ambiant (S_{U}).

8. Le véhicule selon l'une des revendications 1 à 7, **caractérisé en ce qu'**une distance (a) entre la zone de sortie des gaz d'échappement de pile à combustible (34) et la zone de sortie d'air ambiant (42) est inférieure à 50 %, de préférence inférieure à 10 %, d'une distance (A) entre la au moins une zone d'ouverture (40) et la zone de sortie d'air ambiant (42).

9. Le véhicule selon l'une des revendications 1 à 8, **caractérisé en ce qu'**un ventilateur d'air ambiant (52) est associé au dispositif de chauffage d'air ambiant (38) pour acheminer de l'air ambiant (U) à chauffer et/ou de l'air ambiant chauffé (U_{E}), et **en ce que** le ventilateur d'air ambiant (52) est disposé en aval du dispositif de chauffage d'air ambiant (38) par rapport au sens d'écoulement d'air ambiant (U_{S}).

10. Le véhicule selon la revendication 9, **caractérisé en ce que** le ventilateur d'air ambiant (52) est disposé en aval de la zone de sortie des gaz d'échappement de pile à combustible (34) par rapport à la direction d'écoulement d'air ambiant (U_{S}).

11. Le véhicule selon l'une quelconque des revendications 1 à 10, **caractérisé en ce que** le système de gaz d'échappement de pile à combustible (20) comprend un dispositif de traitement des gaz d'échappement de pile à combustible (22), dans lequel le dispositif de traitement des gaz d'échappement de pile à combustible (22) comprend au moins l'un des ensembles suivants :
- un séparateur de liquide (24),
- un convertisseur catalytique (26),
- un silencieux (28).

12. Un procédé pour faire fonctionner un système de pile à combustible dans un véhicule selon l'une quelconque des revendications 1 à 11, dans lequel un mélange (G) d'air ambiant (U) et de gaz d'échappement de pile à combustible (As) qui est évacué au niveau de la zone de sortie des gaz d'échappement de pile à combustible (34) d'un système de gaz d'échappement de pile à combustible (20), qui est associé à un ensemble de piles à combustible (14) du système de pile à combustible, est généré, dans lequel au moins une partie de l'air ambiant (U) mélangé aux gaz d'échappement de pile à combustible (As) est chauffée avant d'être mélangée aux gaz d'échappement de pile à combustible (A_{B}), dans lequel l'air ambiant chauffé (U_{E}) et les gaz d'échappement de pile à combustible (As) sont évacués dans un compartiment d'équipement (36) du véhicule (12) ouvert sur l'environnement, et dans lequel le mélange (G) de gaz d'échappement de pile à combustible (A_{B}) et de l'air ambiant chauffé (U_{E}) est essentiellement formé dans le compartiment d'équipement (36).

13. Le procédé selon la revendication 12, **caractérisé en ce que** l'air ambiant chauffé (U_{E}) destiné à être mélangé aux gaz d'échappement de pile à combustible (As) est chauffé dans au moins un échangeur de chaleur (44) par interaction thermique avec un fluide de refroidissement circulant dans un circuit de refroidissement du véhicule (12).

14. Le procédé selon la revendication 13, **caractérisé en ce que**, afin de régler la température d'air ambiant (U) à chauffer dans ledit au moins un échangeur de chaleur, on modifie le débit massique d'air ambiant (U) circulant à travers ledit au moins un échangeur de chaleur (44) et/ou le débit massique du fluide de refroidissement circulant à travers ledit au moins un échangeur de chaleur (44).

15. Un véhicule, comprenant :
- un système de pile à combustible (10) comprenant un ensemble de piles à combustible (14) et un système d'échappement de pile à combustible (20) recevant des gaz d'échappement de pile à combustible (A_{B}) provenant de l'ensemble de piles à combustible (14), dans lequel le système d'échappement de pile à combustible (20) comporte une zone de sortie des gaz d'échappement de pile à combustible (34) pour évacuer les gaz d'échappement de pile à combustible (As) hors du système de gaz d'échappement de pile à combustible (20),
- un dispositif de chauffage d'air ambiant (38) destiné à chauffer de l'air ambiant (U) à mélanger avec au moins une partie des gaz d'échappement de pile à combustible (As), dans lequel le dispositif de chauffage d'air ambiant (38) comporte une zone de sortie d'air ambiant (42) pour évacuer l'air ambiant (U_{E}) chauffé dans le dispositif de chauffage d'air ambiant (38),
**caractérisé en ce que** la zone de sortie des gaz d'échappement de pile à combustible (34) et la zone de sortie d'air ambiant (42) sont positionnées de telle sorte qu'un flux de gaz d'échappement de pile à combustible (A_{B}) évacué au niveau de la zone de sortie des gaz d'échappement (34) et un flux d'air ambiant chaufée (U_{E}) évacué au niveau de la zone de sortie d'air ambiant (42) se mélangent au moins partiellement dans la zone d'une zone de mélange (M) située à l'extérieur du véhicule (12).
